# EUROPEAN PATENT APPLICATION

(11) **EP 0 602 587 A1**
(43) Date of publication of application: **22.06.1994**
(21) Application number: 93120117.2
(22) Date of filing: 14.12.1993
(51) Int. Cl.: B04B 13/00, H03M 1/22

(54) **Centrifuge rotor identification and instrument control system**

(30) Priority: 14.12.1992 US 990105
(71) Applicant: E.I. DU PONT DE NEMOURS AND COMPANY, Wilmington Delaware 19898 (US)
(72) Inventor: Kakos, Edward Albert, Newton Connecticut 06470 (US)
(74) Representative: von Kreisler, Alek, Dipl.-Chem.

(57) **Abstract**

Each rotor in a family is assigned an N-bit binary number in an increasing sequence of binary numbers in accordance with the maximum permissible speed of that rotor. The value of the digit in each place of the binary number assigned to a given rotor corresponds to the presence of an identity indicator in a corresponding site on that rotor. As each rotor is spun, a binary number representative of the actual number and of the actual sites occupied by identity indicators on the rotor being spun is generated. The speed of the rotor is limited to the speed corresponding to the binary number generated.

## Description

### BACKGROUND OF THE INVENTION

Field of the Invention. The present invention relates to a safety system for a centrifuge instrument, and in particular, to a fail-safe system for preventing the occurrence of an overspeed condition occasioned by the misidentification of a rotor which is mounted in the instrument.

Description of the Prior Art. A centrifuge instrument is a device by which a sample of a liquid is exposed to a centrifugal force field. The sample is carried within a centrifuge rotor, which is a relatively massive member traditionally fabricated from materials such as aluminum or titanium.

A centrifuge instrument may accept any one of a plurality of different centrifuge rotors, depending upon the separation protocol being performed. Accordingly, for both speed and temperature control considerations, it is advantageous to be able to ascertain the identity of the particular rotor mounted within the instrument during a given run. Such rotor identification information is further advantageous from a safety standpoint, since access to such information prevents operation of the rotor at a speed in excess of the rotor's maximum design speed or at an energy level in excess of the maximum containment energy of the instrument.

Various rotor identification arrangements are known. A typical identification system utilizes indicators disposed on each of the rotors in the rotor family and cooperating sensors disposed in the instrument. The indicators usually take the form of magnets or a disc affixed to the underside of the rotor having reflective and nonreflective areas. As the rotor is rotated past the sensor, an identification code representative of the identity of the particular rotor is generated.

In some instances, however, it is possible that an indicator may become dislodged from a given rotor. If this occurs, the rotor would be misidentified. Potentially catastrophic results may stem from a rotor misidentification. For example, if a misidentified rotor were permitted to rotated at a speed in excess of its maximum rated speed, the possibility of rotor failure would increase.

In view of the foregoing it is believed advantageous to provide a rotor identification system that avoids the possibility of rotor misidentification due to loss of rotor indicator.

### SUMMARY OF THE INVENTION

The present invention is directed to a rotor identification system operable to identify each of a plurality of centrifuge rotors. Each rotor has a predetermined maximum speed value associated therewith and a different combination of identity indicators thereon. Each identity indicator is disposed in one of a predetermined number N of discrete sites on a rotor. As the rotor is rotated past a sensor arrangement containing one or more detectors disposed in the instrument, an N-place binary number is generated in accordance with the actual number and actual location of the indicators on the rotor being sensed.

In accordance with the present invention each rotor in a rotor family is assigned a predetermined different N-place binary number selected from an increasing sequence of binary numbers. The same place in each binary number corresponds to the same predetermined site on each rotor in the family. The value of the binary digit in each place in any binary number is assigned in accordance with the presence of a indicator at the site on that rotor corresponding to that place in the binary number.

The assignment of a binary number to a given rotor is made in accordance with the maximum speed of that rotor, such that each successive higher-valued binary number in the sequence is assigned to a rotor having a successively higher maximum rotational speed. When the rotor is rotated past the sensor the binary number so produced is related to the actual number of indicators then actually present on the rotor and to the sites then actually occupied by those indicators. Thus, the value of the binary digit in a given place in the binary number is representative of the presence (or absence) of an identity locator in the corresponding site on the rotor. The speed of the rotor is limited to the speed of the rotor corresponding to the sensed binary number.

### BRIEF DESCRIPTION OF THE DRAWINGS

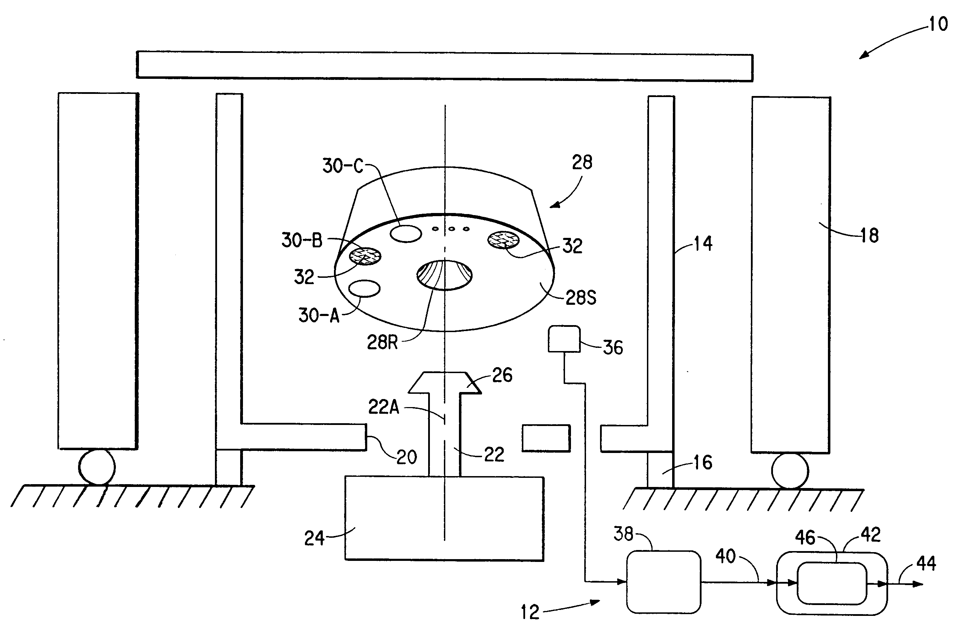

The invention will be more fully understood from the following detailed description, taken in connection with the accompanying drawing, which forms a part of this application and in which the sole Figure is a stylized pictorial representation of a centrifuge instrument having a rotor identification system in accordance with the present invention, with the rotor itself being tilted to show the undersurface thereof.

### DETAILED DESCRIPTION OF THE DRAWING

With reference to the Figure shown is a stylized pictorial representation of a centrifuge instrument 10 in which a rotor identification system generally indicated by the reference character 12 in accordance with the present invention may be used. The instrument 10 includes a chamber, or bowl, 14 supported on a framework 16. The bowl 14 is surrounded by a concentrically disposed guard ring 18. The bowl 14 has a central opening 20 disposed therein. A drive shaft 22 from a suitable motive source 24 extends through the opening 20 into the interior of the bowl 14.

The upper end of the drive shaft 22 has a mounting member 26 on which each one of a family of centrifuge rotors 28 may be mounted for rotation about a central axis 22A. Visible in the Figure is the bottom surface 28S of a typical centrifuge rotor 28 in the rotor family. Each rotor in the family has a predetermined maximum speed value associated therewith.

The surface 28S has a mounting recess 28R therein. The recess 28R receives the member 26 when the rotor is mounted thereon. The surface 28S has a predetermined plural number N of discrete sites 30-A through 30-N thereon. Each site is indicated by a dot-dash circle. Any convenient number N of sites 30 may be provided. Each of the sites 30 defines a possible location at which a detectable identity indicator 32 may be attached to the rotor 10. In the Figure an identity indicator is illustrated by crosshatched shading. The identity indicator 32 may take the form of magnets of any appropriate polarity, as in United States Patent 4,772,254 (Grassl et al.), United States Patent 4,700,117 (Grebeler), or United States Patent 4,551,715 (Durbin et al.), or of a disc having light reflective and/or non-reflective areas thereon, as disclosed in United States Patent 4,205,261 (Franklin) or United States Patent 3,746,247 (Camilliere).

The sites 30 may be arranged in any convenient fashion on the rotor 28. For example, the indicators 28 may be disposed in a single annular array, as disclosed and claimed in copending application Serial Number 07/958,996 filed October 9. 1992 and assigned to the assignee of the present invention. Alternatively, if desired, the indicators 32 may be arranged in any convenient number of concentric annular rings. It should be noted that although the present description discusses the situation where the indicators are disposed on the bottom surface of the rotor, any convenient surface or combination of rotor surfaces may be employed to affix the indicators. Moreover, it should be understood that other indicators, such as those used to generate synchronization signals used in the rotor recognition system and/or in other diagnostic and/or safety systems, may also be present on the rotor.

However they are arranged, each rotor 28 in the family of rotors has a different combination of identity indicators 32 thereon. Each identity indicator 32 is disposed in one of a predetermined number of sites 30 on the rotor.

A sensor arrangement 36, comprised of an array of one or more detectors, is mounted at a convenient location in the instrument. The sensor arrangement 36 is operative to generate (either directly or through a suitable electronic network 38), a binary number representative of the actual number of indicators present on the rotor and of the actual sites occupied by those indicators. The sensor arrangement 36 (with or without the network 38, as the case may be) defines means for generating a binary number representative of the actual number of and the actual sites occupied by the identity indicators then actually on the rotor. The binary number generated from the sensor arrangement 36 (or from the network 38) is applied over a line 40 to a control network 42. The control network 42 responds to the binary number sensed by the sensor arrangement 36 to control various centrifuge operating parameters, such as the maximum permissible speed of rotor rotation, for a centrifugation run using the rotor. A control signal is output from the control network 42 on a line 44.

To obviate the possibility of deleterious consequences in the event one or more of the identity indicators 32 may become dislodged or is otherwise missed, the system of the present invention is used. In accordance with the present invention each rotor in the rotor family is assigned a predetermined different N-place binary number selected from an increasing sequence of binary numbers. The same place in each binary number corresponds to the same predetermined site 30 on each rotor in a rotor family. The value of the binary digit in each place in the binary number assigned to each rotor is determined in accordance with the presence of an indicator 32 in the corresponding site 30 on that rotor. By "place" it is meant a location in a positional notation system of numeration. For example, in a binary system of numeration, the first place to the left of the decimal point is the 2⁰ position, the second place to the left of the decimal point being the 2¹ position, the third place to the left of the decimal point being the 2² position, et seq. The assignment of a binary number to a given rotor is made in accordance with the maximum speed of that rotor, such that each successive higher valued binary number in the sequence is assigned to a rotor having a successively higher maximum speed.

In accordance with the present invention, when a rotor is rotated past the sensor arrangement 36 to generate a binary number representing the actual number of identity indicators and the actual sites occupied by the identity indicators actually on the rotor, the speed of the rotor on the shaft is limited to the rotor speed corresponding to the value of the sensed binary number.

To implement the system of the present invention, the control network 42 may include a memory 46 containing a correspondence table in which the sequence of binary numbers assigned in the manner discussed is stored. The networks 38 and 42 may be realized using a microprocessor based implementation in which the correspondence table is stored in the memory of the computer system of which the microprocessor is a part.

The foregoing may be made more clear by the following example.

### EXAMPLE

It is assumed that a rotor family contains eight rotors, R₁ through R₈, each of which may be safely spun at an increasingly higher rotational speed. Each rotor has three possible sites 30A, 30B, 30C thereon at which an identity indicator 32 may be disposed. In accordance with the present invention each rotor in the family is assigned a predetermined different three-place binary number selected from an increasing sequence of three-place binary numbers. The first place P₁ in each binary number corresponds to the site 30A on a rotor, the second place P₂ in each binary number corresponds to the site 30B on the rotor, while the third place P₃ in each binary number corresponds to the site 30C on a rotor. The value of the binary digit (i.e., whether a "1" or "0") in each respective place P₁, P₂, or P₃ depends the presence of an identity indicator in the corresponding site on that rotor. If an identity indicator is present at a given site a binary value of "1" is assigned to the place in the binary number corresponding to that site. The assignment of a binary number to a given rotor is made in accordance with the maximum speed of that rotor. Thus, each successive higher valued binary number in the sequence is assigned to a rotor having a successively higher maximum speed.

The foregoing is summarized in the following Correspondence Table.

| CORRESPONDENCE TABLE | | | | | | | |
|---|---|---|---|---|---|---|---|
| Rotor | Max. Speed | Indicator Present At | | | Binary Numbers | | |
| | | Site 30A | Site 30B | Site 30C | Place P₁ | Place P₂ | Place P₃ |
| R₁ | 1000 | No | No | No | 0 | 0 | 0 |
| R₂ | 2000 | No | No | Yes | 0 | 0 | 1 |
| R₃ | 3000 | No | Yes | No | 0 | 1 | 0 |
| R₄ | 4000 | No | Yes | Yes | 0 | 1 | 1 |
| R₅ | 5000 | Yes | No | No | 1 | 0 | 0 |
| R₆ | 6000 | Yes | No | Yes | 1 | 0 | 1 |
| R₇ | 7000 | Yes | Yes | No | 1 | 1 | 0 |
| R₈ | 8000 | Yes | Yes | Yes | 1 | 1 | 1 |

More specifically, rotor R₇, if properly marked, should have an identity indicator at sites 30A and 30B, with no indicator present at the site 30C. The binary number assigned by that rotor (and which would be produced when that rotor is rotated past a sensor) is "1-1-0". The maximum permissible rotor speed for rotor R₇ is 7,000 rpm. However, assume that rotor R₇ is somehow damaged so that the identity indicator that should have been present at site 30B is missing. If such a defective rotor is placed in the instrument the actual binary number sensed by the sensor arrangement for the rotor is "1-0-0". The control system limits the speed of the rotor R₇ to 5000 rpm, the speed corresponding to the rotor having been assigned that binary number "1-0-0" (i. e., the rotor R₇). A similar result obtains (i.e., the rotor limited to a speed less than its maximum permissible speed) if other identity indicator(s) are missing.

The speed to which the rotor may be rotated is limited by the control network 42 to the speed corresponding to the value of the binary number actually generated. In this manner the speed of a rotor is limited to a fail-safe speed.

Those skilled in the art, having the benefit of the teachings of the present invention as hereinabove set forth may effect numerous modifications thereto. Such modifications are to be construed to lie within the contemplation of the present invention, as defined by the appended claims.

## Claims

1. A method of limiting the speed to which each of a plurality of centrifuge rotors may be rotated, each rotor having a predetermined maximum speed value associated therewith,
each rotor having a different combination of identity indicators thereon with each identity indicator being disposed in one of a predetermined number N of sites on a rotor,
the method comprising the steps of:
a) assigning to each rotor a predetermined different N-bit binary number selected from an increasing sequence of binary numbers, each binary number having N places therein,
the same place in each binary number corresponding to the same predetermined site on a rotor,
the value of the binary digit in each place in the binary number being assigned to each rotor in correspondence to the presence of an identity indicator in the corresponding site on that rotor,
the assignment of a binary number to a given rotor being made in accordance with the maximum speed of that rotor, such that each successive higher valued binary number in the sequence is assigned to a rotor having a successively higher maximum speed;
b) rotating a rotor past a sensor arrangement to generate a binary number representing the actual number and actual sites occupied by indicators actually on the rotor; and
c) limiting the speed of the rotor to the rotor speed corresponding to the generated binary number.

2. A method of identifying each rotor of a plurality of centrifuge rotors, each rotor having a different combination of identity indicators thereon, with each identity indicator being disposed in one of a predetermined number N of sites on a rotor,
the method comprising the steps of:
a) creating a correspondence table by assigning to each rotor a predetermined different N-bit binary number selected from an increasing sequence of binary numbers, each binary number having N places therein,
the same place in each binary number corresponding to the same predetermined site on a rotor,
the value of the binary digit in each place in the binary number being assigned to each rotor in correspondence to the presence of an identity indicator in the corresponding site on that rotor,
the assignment of a binary number to a given rotor being made in accordance with the maximum speed of that rotor, such that each successive higher valued binary number in the sequence is assigned to a rotor having a successively higher maximum speed;
b) providing an identity indicator at one or more sites on each rotor in accordance with value of each place in the binary number assigned to that rotor.

3. A control system for limiting the speed to which each of a plurality of centrifuge rotors may be rotated, each rotor having a predetermined maximum speed associated therewith,
each rotor having a different combination of identity indicators thereon with each identity indicator being disposed in one of a predetermined number N of sites on a rotor, the system comprising:
a) a memory having a correspondence table stored therein, the correspondence table being creating by assigning to each rotor a predetermined different N-bit binary number selected from an increasing sequence of binary numbers, each binary number having N places therein,
the same place in each binary number corresponding to the same predetermined site on a rotor,
the value of the binary digit in each place in the binary number assigned to each rotor corresponding to the presence of an identity indicator in the corresponding site on that rotor,
the assignment of a binary number to a given rotor being made in accordance with the maximum speed of that rotor, such that each successive higher valued binary number in the sequence is assigned to a rotor having a successively higher maximum speed,
b) means for generating a binary number representing the actual number and the actual sites occupied by identity indicators actually on the rotor; and
c) a control network associated with the memory and responsive to the binary number generating means for limiting the speed to which the rotor may be rotated to the rotor speed corresponding to the value of the binary number generated.
